Europäisches Patentamt

European Patent Office

Office européen des brevets

(11) Publication number: **0 202 914 B1**

(12) **EUROPEAN PATENT SPECIFICATION**

(45) Date of publication of patent specification: **15.05.91**  (51) Int. Cl.⁵: **G11B 7/007,** //G11B7/013

(21) Application number: **86303818.8**

(22) Date of filing: **20.05.86**

(54) **Process for effecting erasure of optical information media.**

(30) Priority: **21.05.85 US 736340**

(43) Date of publication of application:
**26.11.86 Bulletin 86/48**

(45) Publication of the grant of the patent:
**15.05.91 Bulletin 91/20**

(84) Designated Contracting States:
**DE FR GB**

(56) References cited:
**EP-A- 0 136 574**
**JP-A-60 029 949**
**US-A- 3 778 785**

(73) Proprietor: **CELANESE CORPORATION**
**1211 Avenue of the Americas**
**New York New York 10036(US)**

(72) Inventor: **Furman, Steven R**
**2731 Killian Place**
**Union New Jersey(US)**
Inventor: **Kuder, James E**
**91 Willoughby Road**
**Fanwood New Jersey(US)**

(74) Representative: **De Minvielle-Devaux, Ian**
**Benedict Peter et al**
**CARPMAELS & RANSFORD 43, Bloomsbury**
**Square**
**London WC1A 2RA(GB)**

## Description

Field of the Invention:

The present invention relates to a process for the erasure of information recorded in an optical information medium. More specifically, the present process pertains to an erasure procedure which invokes the adjustment of certain defined parameters in order to effect accurate, efficient and clean erasure of the information desired to be erased.

Description of the Prior Art:

The accurate and efficient erasure of information patterns in an optical information medium has long been a problem. Various techniques of irradiating and/or heating an optical information medium in order to effect erasure have been attempted.

Techniques for erasing film deformation patterns are particularly widespread. Generally, such techniques have involved heating the film, generally a thermoplastic, sufficiently above its melting point so as to cause surface tension to smooth out the thermoplastic surface. The heating can be global or localized, e.g., by use of a laser beam. When a laser beam is used for the erasure procedure, various alterations in a parameter such as the laser power or focus offset have been made in order to effect the erasure.

U.S. Patent No. 4,264,986 discloses a method for recording and erasing information in an optical information medium. In the process, a pulsed laser beam is used to inject a pulse of heat energy into a smooth-surfaced recording medium to produce a recording mark left on the surface of the recording medium in the form of a crisply-defined pit or crater. Erasure is achieved by adjusting the intensity of the pulse of laser radiation injected into the recording medium. In the case of a pit or crater, for instance, the depressed area is thereby remelted and raised to a temperature such that a rate of cooling is achieved which results in the remelted volume solidifying to its original state of specific volume, so that the pit is erased and the surface of the medium is restored to its original smooth condition.

In the article "Reversible Read-Write-Erase Properties of Styrene Oligomer Optical Recording Media," Japanese Journal of Applied Physics, Vol. 22, No. 2, Feb. 1983, pp. 340-343, there is discussed a total surface heat erasure procedure and a scanning erasure procedure for the erasure of a sequence of pits. In the scanning erasure procedure, the writing objective lens is moved exactly 10 $\mu$m out of focus towards the medium, and then the disk surface is irradiated with 10mW of laser light from a He-Ne laser by moving the light beam in the direction of the pit sequence at a speed of 1mm/sec.

Another procedure for the erasure of a deformation pattern is described in U.S. Patent No. 3,475,760, issued to Carlson. The patent discloses a system for recording information as a deformation pattern on a thermoplastic medium by scanning the medium with a high energy small diameter laser beam capable of directly forming a schlieren-readable deformation pattern in the medium without having to provide an electrical charge pattern. Selective erasing of a previously recorded deformation pattern on the medium is provided for by simply recording over the area to be erased using a similar laser beam as used for the previous recording but with a smaller scan line spacing.

Erasure of information patterns other than deformation patterns has also been suggested. For example, note U.S. Patent No. 4,425,570, issued to Bell et al, which pertains to a reversible recording medium and information record wherein the light absorptive layer is a granular material comprising domains of a light sensitive material embedded in a dielectric matrix. The domains comprise a material which can be reversibly switched from a first state to a second state having different optical properties by the absorption of light. Useful materials include tellurium, selenium or alloys containing these materials, arsenic triselenide, arsenic trisulfide and other chalcogenide alloys where absorbed light produces a change in the degree of crystallinity.

The problem to date, however, is that the erasure techniques heretofore known have often resulted in noisy, i.e., not clean, or incomplete erasure. As well, erasure is often times accompanied by or the result of gouging or additional writing. This results in a noisy record of information. It would be preferable to return the medium to a clean, unwritten state upon erasure. A process for avoiding these disadvantages, therefore, is most desired in the art. Indeed, a process which can provide accurate, fine-tuned yet complete erasure would greatly enhance the commercial viability of optical information media.

Accordingly, it is an object of the present invention to provide a novel process for the erasure of an information pattern recorded in an optical information medium which overcomes the aforementioned problems.

2

It is another object of the present invention to provide a process for erasing information in an optical information medium wherein, specifically, the information is in the form of pits.

Another object of the present invention is to provide a process for the erasure of information recorded in an optical information medium which effects accurate yet complete erasure of the information.

Still another object of the present invention is to provide a process for the erasure of information recorded in an optical information medium which effects erasure without additional writing on the medium or gouging of the medium.

Yet another object of the present invention is to provide an efficient process for the erasure of information recorded in an optical information medium which effects erasure and leaves a noise-free background.

One or more of these and other objects can be achieved by means of the present invention, as will be apparent to those skilled in the art from the following description, the drawings and the appended claims.

## SUMMARY OF THE INVENTION

The invention provides a process for erasure of information recorded in an optical information medium by irradiating the medium with a laser beam, the process including adjusting the laser beam power level on the medium, and being characterized in that the duty cycle and focus offset of the laser are adjusted from that used during writing such that upon subsequent irradiation of those portions of the medium containing the information to be erased with a laser beam complete erasure of the information desired to be erased is effected substantially without additional writing, with at least two on/off cycles being realized in erasing any one bit of information, and with the duty cycle being the parameter for which the greatest adjustment is made.

In carrying out the process defined above, the procedure used generally involves irradiating the medium with a laser beam subsequent to adjusting the duty cycle, laser power and focus offset of the laser from that used during the writing step. The adjustment of the three foregoing parameters is such that complete erasure is effected substantially without additional writing. The present process allows one accurate and complete erasure through control of the foregoing parameters, whether bit-by-bit or sector-by-sector, and is particularly applicable for the erasure of information recorded in an optical information medium in the form of pits or some other deformation pattern. In the case of pits, the erasure effected is a levelling of the pits.

In preferred embodiments, the adjustments made to the laser power and/or to the focus offset is or are as minimal as possible to effect the complete erasure of the information without additional writing. The duty cycle is always the parameter of the three for which the greatest adjustment is made. This allows for the utilization of less electronic hardware and can result in a faster response time to the erasure mode of the overall system.

## BRIEF DESCRIPTION OF THE DRAWING

Fig. 1 is a schematic representation of a laser system useful in writing, reading and erasing information in an optical information medium.

Fig. 2 and Fig. 3 are plots of experimental runs, which plots indicate when complete erasure occurs in accordance with the present invention.

## DETAILED DESCRIPTION OF THE PREFERRED EMBODIMENTS

The present process is applicable to any optical information medium having an information pattern thereon, which medium is capable of thermal erasure upon irradiation with a laser beam. Such media are well known and can comprise a polymer, polymer/dye combination, dye or chromophoric material, or an amorphous/crystalline material such as those disclosed in U.S. Patent No. 4,425,570. Preferred polymers of which the medium can be comprised include, but are not limited to, the dimer acid polyamides, e.g., as disclosed in U.S. Patent No. 4,470,782.

The medium can be formed using conventional technology as is well known to the skilled artisan. For example, conventional coating techniques such as spin coating can be used. The information pattern can also have been recorded in the medium using any of the well-known techniques or systems replete in the art. The information pattern can be of the amorphous/crystalline type, or a deformation pattern such as one comprised of pits. The only requirement being that thermal erasure is possible upon irradiation. The present process is most applicable to information patterns comprised of pits or some other deformation.

The erasure process of the present invention comprises adjusting three defined parameters of the laser system and then simply irradiating those portions of the medium containing the information to be erased with a laser beam. The irradiation can be such as to effect erasure of a single bit of information at a time, i.e., bit-by-bit erasure wherein the erase beam addresses the medium until the desired bit of information is erased. Or, the irridiation can be sector-by-sector wherein the medium is addressed by the erase beam until the sector of information to be erased has been erased. Such fine-tuned and accurate erasure has been found consistently possible through the practice of the present invention wherein the three defined parameters of duty cycle, laser power, and focus offset are controlled and adjusted appropriately from that used during writing.

The duty cycle is defined as that fraction of time the laser is on in any one on/off cycle. For the purposes of the present invention, it is important that at least two on/off cycles, and preferably more than two cycles, e.g., generally at least 500 cycles, are realized in erasing any one bit of information. In other words, the period of the on/off cycles is less than the time required for the beam to scan a single bit of information.

The laser power parameter is defined as the amount of energy being delivered to the surface of the media.

The focus offset is the distance from the optimal focus point, which is that point in which the beam is in focus on the medium surface. In general, the farther one strays from the optimal focus point, the more diffuse the energy at the medium plane.

In accordance with the present invention, the three foregoing parameters are adjusted in order that complete erasure of the desired information occurs without additional writing on the surface medium. It is important to note that the specific adjustments will vary from medium to medium, and further, as each particular medium differs in thickness and viscosity. By concentrating on the three foregoing parameters, however, one can readily determine the particular adjustments to make in order to insure complete erasure without writing for a particular given medium and given scan speed.

The simple adjustment of but a single parameter, such as the focus offset, generally results in writing or gouging during erasure. As a result, a noisy background remains. Furthermore, movement of the optics in order to adjust the focus offset generally requires substantial movement of the optics, which is undesirable. Minimal movement or adjustment would be preferred. If only the laser power or intensity is adjusted, poor control of the erasure is generally the result. Thus, control over the width and degree of erasure is poor, essentially precluding bit-by-bit erasure.

The erasure process of the present invention and its surprising advantages are therefore derived at least in part from the recognition of the importance of the three aforedefined parameters and their interrelationship in achieving a clean, efficient and complete erasure. The adjustment of all three parameters provides one with an erasure process which is more accurate, complete and finely tuned than has heretofore been possible or known to the prior art.

By the present process; wherein all three defined parameters are adjusted prior to addressing the medium with the erase beam, the possibility of writing while erasing and incomplete erasure are eliminated. Yet, fine control over the degree of erasure is realized, as single bit erasure is possible. Also, one can readily adjust the width of erasure, even to the width of the information bit. This is all possible because of the recognition of the importance of the duty cycle in conjunction with the focus offset and laser power parameters. Indeed, by adjusting the duty cycle primarily, little adjustment of the focus offset is necessary, thereby requiring little movement of the optics. As well, little adjustment of the laser power is thereby required. The present process permits one a more finely tuned, accurate and complete erasure.

The present invention is further illustrated by the following example, the details of which are in no way meant to be limitative, but rather merely illustrative.

## EXAMPLE

The following example demonstrates the ability of achieving clean and complete erasure of an information pattern of pits recorded in an optical information medium upon properly adjusting the three parameters of duty cycle, laser power and focus offset in accordance with the present invention. As well, the examples show the importance of the combination of parameters, as incomplete erasure or writing occurs when the parameters are not carefully controlled. By following the procedure of the example, one

EP 0 202 914 B1

will also be able to determine the appropriate parameters for any given medium and scan speed.

In the example, the optical medium comprised a dye/polymer film coated on a glass substrate. The dye/polymer combination had been spin coated onto the glass substrate from dichloroethane. The thickness was 0.17 microns.

The dye/polymer information layer, specifically, was comprised of a dimer acid polyamide, an Eastman cyanine dye available under the designation IR-312, and a nickel coordination complex dye available from Mitsui Toatsu Co. under the designation PA-1006. The weight ratio of cyanine dye to nickel complex dye was 2:1, and the weight ratio of polymer to total dye content was 7.6:1.

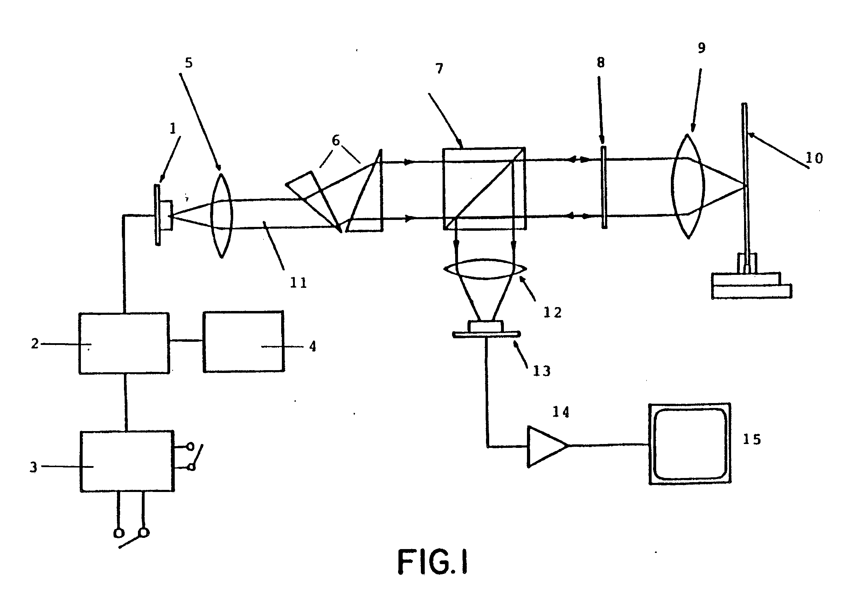

The erasing was accomplished using the laser set-up depicted schematically in Fig. 1. In the Figure of the Drawing, electrical power is fed to the diode laser 1 from a driver unit 2. The driver is itself addressed by two other components (i) the pulse generator 3 which controls the pulse width of the laser output and (ii) the power selector 4 which controls the power of each laser pulse. The laser output was 830 nm.

The beam 11 emerging from the diode junction is oval and diverging. The collimator lens 5 converts the diverging beam into one whose rays are parallel. The prism pair 6 converts the oval beam into one with circular cross section.

The collimated circular beam passes through a polarizing beam splitter (PBS) 7 and quarter wave plate 8 and is focused by a lens 9 onto the sample 10. The combination of PBS and quarter wave plate serves to separate the incident and reflected beams. This is accomplished by controlling the polarization of light with respect to the hypotenuse interface of the two right angle prisms which are cemented together to form the PBS.

In the optical train of the tester, light enters the PBS with p-polarization and emerges from the quarter wave plate with circular polarization and is then focused onto the sample. Light reflected from the sample is still circularly polarized and after passing through the quarter wave plate is converted to linearly polarized light with s-polarization. It is now reflected to the side by the PBS and then focused through a detector lens 12 onto a photodiode 13.

The photodiode produces a voltage proportional to the light intensity impinging on it. The photovoltage may be amplified 14 and then fed into an oscilloscope 15 or other suitable readout device.

While the foregoing set-up is one example of a set-up useful for writing and reading optical information, as described above, in the present experimental run, the aforenoted set-up was used simply for irradiation in order to erase the recorded pit pattern of information. Reading of information did not take place.

The scan speed employed was 280 μm /second. The laser power, duty cycle and distance out of focus (focus offset) were all noted and recorded, and are tabulated in the following Table. The number of on/off cycles of the laser per bit of information was about 1780, when the duty cycle was less than unity. Also in the Table is the erasure width for each run, which was measured by using a Leitz Orthoplan Po1 optical microscope.

5

## TABLE

| LASER POWER | DUTY CYCLE | ERASURE WIDTH | FOCUS OFFSET |
|---|---|---|---|
| 10 mW | 100% | 12 μm | 40 μm |
| 8 mW | 100% | 10 μm | 40 μm |
| 6 mW | 100% | 9 μm | 40 μm |
| 4 mW | 100% | 7.8 μm | 40 μm |
| 10 mW | 50% | 8 μm | 40 μm |
| 8 mW | 50% | 5.4 μm | 40 μm |
| 6 mW | 50% | 3.7 μm | 40 μm |
| 4 mW | 50% | 2.1 μm | 40 μm |
| 10 mW | 40% | 7.5 μm | 40 μm |
| 8 mW | 40% | 6 μm | 40 μm |
| 6 mW | 40% | 4.2 μm | 40 μm |
| 4 mW | 40% | 3 μm | 40 μm |
| 10 mW | 35% | 6 μm | 40 μm |
| 8 mW | 35% | 4 μm | 40 μm |
| 6 mW | 35% | 2 μm | 40 μm |
| 4 mW | 35% | 2 μm | 40 μm |
| 10 mW | 50% | 11 μm | 35 μm |
| 8 mW | 50% | 10 μm | 35 μm |
| 6 mW | 50% | 9 μm | 35 μm |
| 4 mW | 50% | 8 μm | 35 μm |
| 10 mW | 40% | 10 μm | 35 μm |
| 8 mW | 40% | 8 μm | 35 μm |
| 6 mW | 40% | 5.5 μm | 35 μm |
| 4 mW | 40% | 3.8 μm | 35 μm |
| 10 mW | 35% | 7 μm | 35 μm |
| 8 mW | 35% | 5 μm | 35 μm |
| 6 mW | 35% | 3 μm | 35 μm |
| 4 mW | 35% | 3 μm | 35 μm |
| 10 mW | 50% | 9 μm | 30 μm |
| 8 mW | 50% | 6.9 μm | 30 μm |
| 6 mW | 50% | 6.0 μm | 30 μm |
| 4 mW | 50% | 5.2 μm | 30 μm |

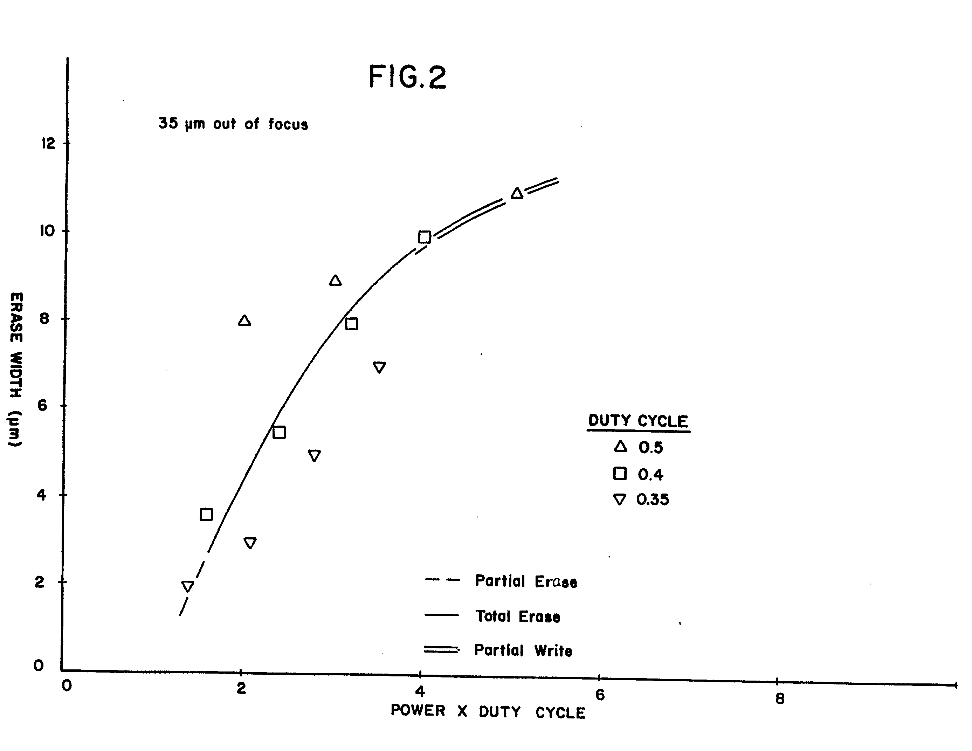

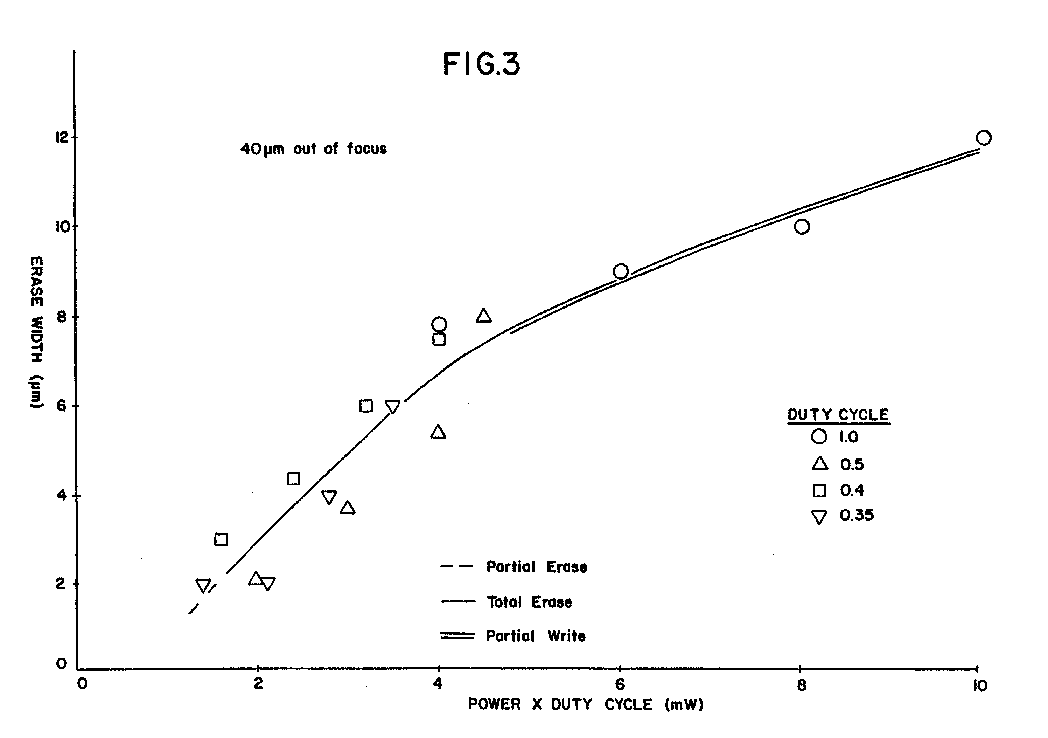

The foregoing data are also graphically displayed in Figs. 2 and 3. Therein, the graphs have been separated according to focus offset, with the graphs reflecting erasure width vs. (laser power x duty cycle).

From the graphs, the importance of the three parameters can be clearly seen. If the three are not properly controlled, either partial erasure or writing occurs with erasure. Upon appropriately adjusting the parameters, however, complete fine-tuned erasure is achieved without writing.

The data in the foregoing Table also demonstrates the ability to control the erasure width upon simply adjusting the duty cycle, and keeping the other parameters constant. This is important as it is most desirable to have the erasure width as close to the information bit width as possible.

# EP 0 202 914 B1

## Claims

1. A process for erasure of information recorded in an optical information medium by irradiating the medium with a laser beam, the process including adjusting the laser beam power level on the medium, and being characterized in that the duty cycle and focus offset of the laser are adjusted from that used during writing such that upon subsequent irradiation of those portions of the medium containing the information to be erased with a laser beam complete erasure of the information desired to be erased is effected substantially without additional writing, with at least two on/off cycles being realized in erasing any one bit of information, and with the duty cycle being the parameter for which the greatest adjustment is made.

2. The process for erasure of Claim 1, wherein the information recorded in the optical information medium is in the form of pits, and the erasure effected is a levelling of the pits.

3. The process for erasure of Claims 1 or 2, wherein the focus offset is adjusted the minimal amount possible to effect the complete erasure of the information without additional writing.

4. The process for erasure of any of Claims 1-3, wherein the laser power is adjusted the minimal amount possible to effect the complete erasure of the information without additional writing.

5. The process for erasure of any of Claims 1-4, wherein the medium comprises a polymeric material.

6. The process for erasure of Claim 5, wherein the medium comprises a dimer acid polyamide.

7. The process for erasure of any of Claims 1-6, wherein the medium comprises a dye or chromophoric material.

8. The process for erasure of any of Claims 1-7, wherein bit-by-bit erasure is effected.

9. The process for erasure of any of Claims 1-7, wherein a single bit of information is erased.

10. The process for erasure of any of Claims 1-7, wherein sector-by-sector erasure is effected.

11. The process for erasure of any of Claims 1-10, wherein the width of erasure is substantially the same as the width of the bits of information to be erased.

12. The process for erasure of any of Claims 1-11, wherein the laser beam is emitted from a AlGaAs diode laser.

## Revendications

1. Procédé pour l'effacement d'une information enregistrée dans un milieu d'information optique par irradiation du milieu au moyen d'un faisceau laser, le procédé consistant à ajuster le niveau de puissance du faisceau laser sur le milieu et étant caractérisé en ce que la durée utile et le décalage de défocalisation du laser sont ajustés par rapport à ceux utilisés pendant l'écriture de manière que lors d'une irradiation subséquente des portions du milieu contenant l'information à effacer au moyen d'un faisceau laser, un effacement complet de l'information que l'on souhaite effacer soit effectué sensiblement sans écriture additionnelle, avec au moins deux cycles marche/arrêt réalisés dans l'effacement de tout bit de l'information et avec la durée utile qui est le paramètre pour lequel on effectue le plus grand ajustement.

2. Procédé pour l'effacement de la revendication 1, où l'information enregistrée dans le milieu d'information optique a la forme de creux et l'effacement effectué est un nivellement des creux.

3. Procédé pour l'effacement des revendications 1 ou 2, où le décalage de focalisation est ajusté à la quantité minimale possible pour effectuer l'effacement complet de l'information sans écriture additionnelle.

7

4. Procédé pour l'effacement selon l'une quelconque des revendications 1 - 3 , où la puissance du laser est ajustée à la quantité minimale possible pour effectuer l'effacement complet de l'information sans écriture additionnelle.

5. Procédé pour l'effacement selon l'une quelconque des revendications 1-4, où le milieu comprend une matière polymérique.

6. Procédé pour l'effacement de la revendication 5, où le milieu comprend un polyamide acide dimère.

7. Procédé pour l'effacement selon l'une quelconque des revendications 1-6, où le milieu comprend un colorant ou matériau chromophore.

8. Procédé pour l'effacement selon l'une quelconque des revendications 1-7, où on effectue un effacement bit par bit.

9. Procédé pour l'effacement selon l'une quelconque des revendications 1-7, où on efface un seul bit de l'information.

10. Procédé pour l'effacement selon l'une quelconque des revendications 1-7, où on effectue un effacement secteur par secteur.

11. Procédé pour l'effacement selon l'une quelconque des revendications 1-10, où la largeur de l'effacement est sensiblement la même que la largeur des bits de l'information à effacer.

12. Procédé pour l'effacement selon l'une quelconque des revendications 1-11, où le faisceau laser est émis par un laser à diode AlGaAs.


**Ansprüche**

1. Verfahren zum Löschen von Information, die auf ein optisches Informationsmedium aufgezeichnet ist, durch Bestrahlen des Mediums mit einem Laser-Strahl, wobei das Verfahren die Einstellung des Leistungspegels des Laser-Strahls auf das Medium einschließt und dadurch gekennzeichnet ist, daß Arbeitszyklus und Fokusabweichung des Lasers gemäß den beim Schreibvorgang angewandten so eingeregelt werden, daß bei nachfolgender Laser-Bestrahlung derjenigen Stellen des Mediums, die die zu löschende Information enthalten, vollständige Löschung der wunschgemäß zu löschenden Information im wesentlichen ohne zusätzliches Schreiben erreicht wird, wobei wenigstens zwei An/Aus-Zyklen zum Löschen jedes einzelnen Informationsbits durchlaufen werden und der Arbeitszyklus derjenige Parameter ist, nach welchem die Einregelung in erster Linie vorgenommen wird.

2. Löschverfahren nach Anspruch 1, wobei die im optischen Informationsmedium aufgezeichnete Information in Form von Vertiefungen (Pits) vorliegt und die erzielte Löschung in einer Nivellierung der Pits besteht.

3. Löschverfahren nach den Ansprüchen 1 oder 2, wobei die Fokusabweichung auf den geringstmöglichen Betrag eingeregelt wird, bei dem vollständige Löschung der Information ohne zusätzliches Schreiben erzielt wird.

4. Löschverfahren nach irgendeinem der Ansprüche 1-3, wobei die Laser-Energie auf den geringstmöglichen Betrag ein-geregelt wird, bei dem vollständige Löschung der Information ohne zusätzliches Schreiben erzielt wird.

5. Löschverfahren nach irgendeinem der Ansprüche 1-4, wobei das Medium ein polymeres Material umfaßt.

6. Löschverfahren nach Anspruch 5, wobei das Medium ein Dimersäurepolyamid umfaßt.

7. Löschverfahren nach irgendeinem der Ansprüche 1-6, wobei das Medium einen Farbstoff oder ein

8

**EP 0 202 914 B1**

chromophores Material umfaßt.

8. Löschverfahren nach irgendeinem der Ansprüche 1-7, wobei die Löschung Bit für Bit erfolgt.

9. Löschverfahren nach irgendeinem der Ansprüche 1-7, wobei ein einziges Informationsbit gelöscht wird.

10. Löschverfahren nach irgendeinem der Ansprüche 1-7, wobei die Löschung Sektor für Sektor erfolgt.

11. Löschverfahren nach irgendeinem der Ansprüche 1-10, wobei die Breite der Löschung im wesentlichen die gleiche ist wie die Breite der zu löschenden Informationsbits.

12. Löschverfahren nach irgendeinem der Ansprüche 1-11, wobei der Laser-Strahl aus einem AlGaAs-Dioden-Laser emittiert wird.

9

FIG.I

FIG.2

# FIG.3

40 μm out of focus

**ERASE WIDTH (μm)**

**POWER X DUTY CYCLE (mW)**

○ 1.0
△ 0.5
□ 0.4
▽ 0.35

– – Partial Erase

―― Total Erase

═══ Partial Write

EP 0 202 914 B1